# EUROPEAN PATENT APPLICATION

(11) **EP 4 513 917 A1**
(43) Date of publication of application: **26.02.2025**
(21) Application number: 22937806.2
(22) Date of filing: 20.04.2022
(51) Int. Cl.: H04W 8/24, H04W 72/12, H04L 5/00

(54) **USER DEVICE CAPABILITY TRANSMISSION METHOD AND APPARATUS, AND READABLE STORAGE MEDIUM**

(71) Applicant: Beijing Xiaomi Mobile Software Co., Ltd., Beijing 100085 (CN)
(72) Inventor: ZHOU, Rui, Beijing 100085 (CN); GUO, Shengxiang, Beijing 100085 (CN)
(74) Representative: Gunzelmann, Rainer
(86) International application number: PCT/CN2022/087907
(87) International publication number: WO 2023/201569

(57) **Abstract**

The present disclosure provides a user device capability transmission method and apparatus, and a readable storage medium, used in the technical field of wireless communications. The method comprises: sending carrier aggregation capability information to a first network device, the carrier aggregation capability information being used to indicate whether the user device has the capability of receiving non-collocated carrier aggregation in a frequency band. In the present disclosure, a user device sends carrier aggregation capability information to a first network device, so as to accurately indicate whether the user device has the capability of receiving non-collocated carrier aggregation in the frequency band, enabling the first network device to perform reasonable scheduling according to the carrier aggregation receiving capability of the user device, increasing a wireless resource utilization rate.

## Description

### TECHNICAL FIELD

The disclosure relates a field of wireless communication technologies, in particular to a user equipment (UE) capability transmission method, a UE capability transmission apparatus, and a readable storage medium.

### BACKGROUND

In some wireless communication technologies, carrier aggregation (CA) technology is used to expand the transmission bandwidth of a user equipment (UE). In the CA technology, uplink transmission or downlink reception is performed on component carrier (CC) through aggregating a plurality of CCs together.

The CA technology is divided into inter-band CA and intra-band CA according to a frequency range where the carrier is located, and divided into two types: collocated type and non-collocate type according to a base station corresponding to the aggregated CC.

In the case of applying intra-band non-collocated CA, the UE may perform, on the same frequency range, the downlink reception and the uplink transmission under the CA for base stations at different locations.

How to make better use of the intra-band non-collocated CA technology is a problem that needs to be solved.

### SUMMARY

The disclosure provides a user equipment (UE) capability transmission method, a UE capability transmission apparatus, and a readable storage medium.

According to a first aspect, a UE capability sending method, performed by a UE, is provided. The method includes:
sending carrier aggregation (CA) capability information to a first network device, in which the CA capability information is configured to indicate whether the UE has an intra-band non-collocated CA receiving capability.

In some possible implementations, sending the CA capability information to the first network device includes:
sending a capability signaling to the first network device, in which the capability signaling includes the carrier aggregation capability information.

In some possible implementations, the method includes:
receiving a first downlink reference signal sent by the first network device, and a second downlink reference signal sent by a second network device, in which the first network device and the second network device are mutually non-collocated devices.

In some possible implementations, the method includes:
determining, based on the first downlink reference signal and the second downlink reference signal, whether data transmission scheduling based on intra-band non-collocation is supported.

In some possible implementations, determining, based on the first downlink reference signal and the second downlink reference signal, whether the data transmission scheduling based on intra-band non-collocation is supported includes:
determining a degree of difference between received powers of the first downlink reference signal and the second downlink reference signal, and determining whether the data transmission scheduling based on intra-band non-collocation is supported based on the degree of difference between the received powers.

In some possible implementations, determining whether the data transmission scheduling based on intra-band non-collocation is supported based on the degree of difference between the received powers includes:
determining that the data transmission scheduling based on intra-band non-collocation is supported in response to the degree of difference between the received powers being less than or equal to a set threshold.

In some possible implementations, the set threshold is a maximum tolerable value of a degree of difference of intra-band received power of a receiver of the UE.

In some possible implementations, the method includes:
after determining that the data transmission scheduling based on intra-band non-collocation is supported based on the first downlink reference signal and the second downlink reference signal, sending receiving capability information to the first network device, in which the receiving capability information is configured to indicate first information, the first information corresponds to a fact that the data transmission scheduling based on intra -band non-collocation is supported.

In some possible implementations, the method includes:
receiving data transmission scheduling information based on intra-band non-collocation sent by the first network device, and receiving, based on the data transmission scheduling information, first CA downlink service data based on intra-band non-collocation sent by the first network device and second CA downlink service data based on intra-band non-collocation sent by the second network device.

In some possible implementations, the method includes:
after determining that the data transmission scheduling based on intra-band non-collocation is not supported based on the first downlink reference signal and the second downlink reference signal, sending receiving capability information to the first network device, in which the receiving capability information is configured to indicate second information, the second information corresponds to a fact that the data transmission scheduling based on intra-band non-collocation is not supported.

According to a second aspect, a UE capability receiving method, performed by a network device, is provided. The method includes:
receiving CA capability information sent by a UE, in which the CA capability information is configured to indicate whether the UE has an intra-band non-collocated CA receiving capability.

In some possible implementations, receiving the CA capability information sent by the UE, includes:
receiving a capability signaling sent by the UE, the capability signaling including the CA capability information.

In some possible implementations, the method includes:
in response to the CA capability information indicating that the UE has the intra-band non-collocated CA receiving capability, sending a first downlink reference signal to the UE, and sending first scheduling information to a second network device, the first scheduling information being configured to indicate the second network device to send a second downlink reference signal to the UE.

In some possible implementations, the method includes:
receiving capability information sent by the UE, in which the receiving capability information indicates first information, and the first information corresponds to a fact that the data transmission scheduling based on intra-band non-collocation is supported.

In some possible implementations, the method includes:
sending data transmission scheduling information based on intra-band non-collocation to the UE.

In some possible implementations, the method includes:
sending second scheduling information to the second network device, the second scheduling information being configured to indicate the second network device to send second CA downlink service data based on intra-band non-collocation to the UE.

In some possible implementations, the method includes:
sending first CA downlink service data based on intra-band non-collocation to the UE.

According to a third aspect, a communication apparatus is provided. The communication apparatus may be configured to execute the steps performed by the UE in the first aspect described above or in any of the possible designs of the first aspect. The UE may implement each of the functions in the above methods in the form of a hardware structure, or a combination of the hardware structure and the software module.

In implementing the communication apparatus shown in the first aspect in the form of a software module, the communication apparatus may include a transceiver module.

The transceiver module is configured to: send CA capability information to a first network device, in which the CA capability information is configured to indicate whether the UE has an intra-band non-collocated CA receiving capability.

According to a fourth aspect, a communication apparatus is provided. The communication apparatus may be configured to execute the steps performed by the network device in the second aspect described above or in any of the possible designs of the second aspect. The network device may implement each of the functions in the above methods in the form of a hardware structure, or a combination of the hardware structure and the software module.

In implementing the communication apparatus shown in the second aspect in the form of a software module, the communication apparatus may include a transceiver module.

The transceiver module is configured to: receive CA capability information sent by a UE, in which the CA capability information is configured to indicate whether the UE has an intra-band non-collocated CA receiving capability.

According to a fifth aspect, an electronic device is provided. The electronic device includes a processor and a memory. The memory is configured to store computer programs. The processor is configured to execute the computer programs to implement the first aspect or any possible design of the first aspect.

According to a sixth aspect, a communication apparatus is provided. The communication apparatus includes a processor and a memory. The memory is configured to store computer programs. The processor is configured to execute the computer programs to implement the second aspect or any possible design of the second aspect.

According to a seventh aspect, a computer-readable storage medium having instructions (or referred to as computer programs, or programs) stored thereon is provided. When the instructions (or referred to as computer programs, or programs) are called and executed on a computer, the computer is caused to execute the above-mentioned first aspect or any possible design of the first aspect.

According to an eighth aspect, a computer-readable storage medium having instructions (or referred to as computer programs, or programs) stored thereon is provided. When the instructions (or referred to as computer programs, or programs) are called and executed on a computer, the computer is caused to execute the above-mentioned second aspect or any possible design of the second aspect.

In the disclosure, the UE sends the CA capability information to the first network device to accurately indicate whether the UE has the intra-band non-collocated carrier aggregation receiving capability, so that the first network device may realize reasonable scheduling according to the carrier aggregation receiving capability of the UE to improve a utilization rate of wireless resources.

It should be understood that the above general description and the following detailed descriptions are exemplary and explanatory only and do not limit the disclosure.

### BRIEF DESCRIPTION OF THE DRAWINGS

The drawings described herein are used to provide further understanding of the embodiments of the disclosure and constitute a part of this disclosure. Schematic embodiments and their explanations of the embodiments of the disclosure are used to explain the embodiments of the disclosure and do not constitute improper limitations on the embodiments of the disclosure.

The accompanying drawings herein, which are incorporated into and form a part of the description, illustrate embodiments consistent with the embodiments of the disclosure and are used together with the description to explain principles of the embodiments of the disclosure.
FIG. 1 is a schematic diagram of a wireless communication system according to an embodiment of the disclosure.
FIG. 2 is a schematic diagram of a user equipment (UE) capability transmission method illustrated according to an exemplary embodiment.
FIG. 3 is a schematic diagram of a UE capability sending method illustrated according to an exemplary embodiment.
FIG. 4 is a schematic diagram of another UE capability sending method illustrated according to an exemplary embodiment.
FIG. 5 is a schematic diagram of a UE capability receiving method illustrated according to an exemplary embodiment.
FIG. 6 is a schematic diagram of another UE capability receiving method illustrated according to an exemplary embodiment.
FIG. 7 is a schematic diagram of a UE capability sending apparatus illustrated according to an exemplary embodiment.
FIG. 8 is a schematic diagram of another UE capability sending apparatus illustrated according to an exemplary embodiment.
FIG. 9 is a schematic diagram of a UE capability receiving apparatus illustrated according to an exemplary embodiment.
FIG. 10 is a schematic diagram of another UE capability receiving apparatus illustrated according to an exemplary embodiment.

### DETAILED DESCRIPTION

The embodiments of the disclosure are now further described in combination with the accompanying drawings and specific implementations.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the terms "if" and "as is" as used herein may be interpreted as "when", "while" or "in response to determining".

Embodiments of the disclosure are described in detail below, and examples of which are illustrated in the accompanying drawings, in which the same or similar symbols always indicate the same or similar elements. The embodiments described below with reference to the accompanying drawings are exemplary and are intended to be used to explain the disclosure, but should not be construed as limiting the disclosure.

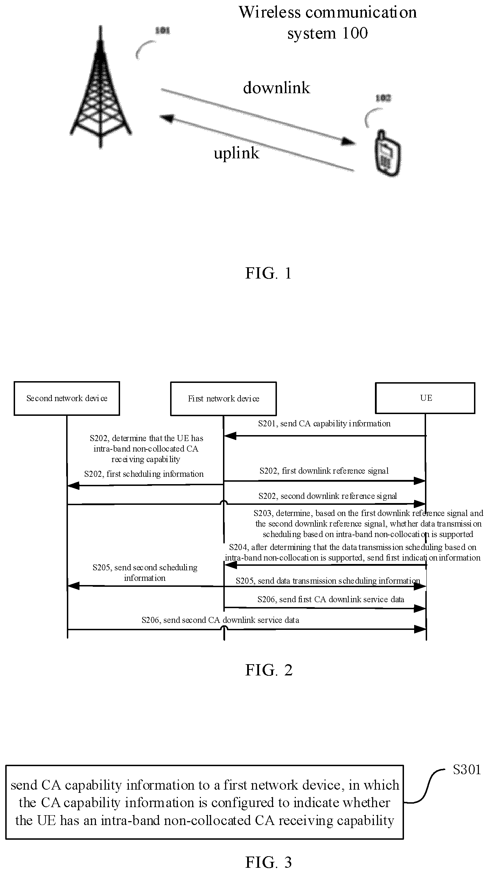

As illustrated in FIG. 1, the embodiment of the disclosure provides a user equipment (UE) capability transmission method, which may be applied to a wireless communication system 100. The wireless communication system may include, but is not limited to, a network device 101 and a UE 102. The UE 102 is configured to support carrier aggregation (CA). The UE 102 may be connected to a plurality of carrier units of the network device 101, in which the carrier units of the network device 101 including one primary carrier unit and one or more auxiliary carrier units.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The above-described UE 102 may be a user equipment (UE), a terminal, an access terminal, a terminal unit, a terminal station, a mobile station (MS), a distant station, a remote terminal, a mobile terminal, a wireless communication apparatus, a terminal agent, or a UE. The UE 102 may have a wireless transceiver function and is capable of communicating (e.g., wirelessly communicating) with one or more network devices 101 of one or more communication systems and accepting a network service provided by the network device 101. The network device 101 here includes, but is not limited to, a base station (BS) shown in the figure.

The UE 102 may be a cellular phone, a cordless phone, a session initiation protocol (SIP) phone, a wireless local loop (WLL) station, a personal digital assistant (PDA) device, a handheld device having a wireless communication function, a computing device or other processing devices connected to a wireless modem, a vehicle-mounted device, a wearable device, a UE in a future 5G network or a UE in a future evolved PLMN network, etc.

The network device 101 may be an access network device (or an access network site). The access network device refers to a device that provides a network access function, such as a radio access network (RAN) base station. The network device may include a BS device, or include a BS device and a radio resource management device for controlling the BS device. The network device may also include a relay station (relay device), an access point, a BS in the future 5G network, a BS in a future evolved PLMN network, or a NR BS. The network device may be a wearable device, a vehicle-mounted device, or a communication chip with a communication module.

For example, the network device 101 includes, but is not limited to, a next generation 5G BS (gnodeB, or referred to as gNB), an evolved node B (eNB) in an LTE system, a radio network controller (RNC), a node B (NB) in a wideband code division multiple access (WCDMA) system, a radio controller under a CRAN system, a BS controller (BSC), a base transceiver station (BTS) in a global system for mobile communication (GSM) system or a code division multiple access (CDMA) system, a home BS (HNB, for example, a home evolved node B or a home node B), a baseband unit (BBU), a transmitting and receiving point (TRP), a transmitting point (TP), or a mobile switching center.

In view of when the UE uses intra-band CA, differences in geographical locations and transmission path losses of a primary network device and a auxiliary network device relative to the UE may result in different received powers used by the UE when receiving a first downlink reference signal sent by the primary network device and a second downlink reference signal sent by the secondary network device. From a perspective of the UE, higher performance is required to use the same receiver to simultaneously receive two downlink reference signals with large energy differences in the same frequency band.

Some UEs may use the same receiver to simultaneously receive two downlink reference signals with large energy differences in the same frequency band, while some UEs cannot complete this reception, which has a greater impact on related scheduling of intra-band non-collocated CA for the UE by the network device.

If the network device does not know whether the UE has an intra-band non-collocated CA receiving capability, the UE that does not have this CA receiving capability may be scheduled, and the UE cannot receive normally, which thus results in CA failure. Alternatively, on the contrary, if the UE has the CA receiving capability, but the network device does not perform corresponding scheduling, it may lead to a waste of wireless resources.

In order to enable the network device to accurately perform the scheduling of the intra-band non-collocated CA, the UE is required to report its capability.

The embodiment of the disclosure provides a method for transmitting measurement capability. FIG. 2 is a flowchart of a method for transmitting measurement capability according to an exemplary embodiment. As illustrated in FIG. 2, the method includes steps S201~S207.

At step S201, a UE sends CA capability information to a first network device.

The CA capability information is configured to indicate whether the UE has an intra-band non-collocated CA receiving capability.

The UE determines whether the UE has the intra-band non-collocated CA receiving capability based on its own hardware and/or software configuration.

If the UE determines that the UE has the intra-band non-collocated CA receiving capability, the CA capability information sent by the UE to the first network device indicates that the UE has the intra-band non-collocated CA receiving capability.

If the UE determines that the UE does not have the intra-band non-collocated CA receiving capability, the CA capability information sent by the UE to the first network device indicates that the UE does not have the intra-band non-collocated CA receiving capability.

In an example, the CA capability information occupies 1 bit. If the UE has the intra-band non-collocated CA receiving capability, the corresponding bit of the sent CA capability information is 1. If the UE does not have the intra-band non-collocated CA receiving capability, the corresponding bit of the sent CA capability information is 0.

In some possible implementations, the UE sends a capability signaling to the first network device. The capability signaling includes the CA capability information.

After receiving the CA capability information, the first network device knows whether the UE has the intra-band non-collocated CA receiving capability.

At step S202, in a case where the first network device determines that the UE has the intra-band non-collocated CA receiving capability according to the received CA capability information, the first network device sends a first downlink reference signal to the UE, and sends first scheduling information to a second network device.

The first scheduling information is configured to indicate the second network device to send a second downlink reference signal to the UE.

In a case where the first network device determines that the UE does not have the intra-band non-collocated CA receiving capability according to the received CA capability information, the first network device does not send the first downlink reference signal to the UE, and does not send the first scheduling information to the second network device. That is, the first network device does not perform the scheduling based on the intra-band non-collocated CA for the UE.

In some implementations, when the first network device does not receive the CA capability information, the first network device considers that the UE does not have the intra-band non-collocated CA receiving capability, so that the first network device does not send the first downlink reference signal to the UE, and does not send the first scheduling information to the second network device.

The first network device and the second network device are mutually non-collocated devices. The first network device is the primary network device corresponding to the CA of the UE, and the second network device is the auxiliary network device corresponding to the CA of the UE.

At step S203, the UE determines, based on the first downlink reference signal and the second downlink reference signal, whether data transmission scheduling based on intra-band non-collocation is supported.

In some possible implementations, it is determined whether the data transmission scheduling based on intra-band non-collocation is supported by comparing relevant parameters of the first downlink reference signal and the second downlink reference signal.

In an example, a degree of difference between received powers of the first downlink reference signal and the second downlink reference signal is determined, and whether the data transmission scheduling based on intra-band non-collocation is supported is determined based on the degree of difference between the received powers.

The degree of power difference may be a difference between the received powers of the first downlink reference signal and the second downlink reference signal. If the received power of the first downlink reference signal is p1 and the received power of the second downlink reference signal is p2, the degree of power difference may be referred to as Δp, and the value of Δp is (p1-p2).

The degree of power difference may also be a ratio of a difference between the received powers to a fixed value. If the received power of the first downlink reference signal is p1 and the received power of the second downlink reference signal is p2, the degree of power difference may be referred to as p', and the value of p' is (p1-p2)/p0, where p0 is a fixed value.

The degree of power difference may also be other expressions that may reflect the degree of difference.

In an example, determining whether the data transmission scheduling based on intra-band non-collocation is supported based on the degree of difference between the received powers includes: in response to the degree of difference between the received powers being less than or equal to a set threshold, determining that the data transmission scheduling based on intra-band non-collocation is supported; and in response to the degree of difference between the received powers being greater than the set threshold, determining that the data transmission scheduling based on intra-band non-collocation is not supported.

The set threshold may be a maximum tolerable value of a degree of difference of intra-band received powers of a receiver of the UE.

At step S204, after determining that the data transmission scheduling based on intra-band non-collocation is supported based on the first downlink reference signal and the second downlink reference signal, the UE sends receiving capability information to the first network device, in which the receiving capability information is configured to indicate first information, and the first information corresponds to a fact that the data transmission scheduling based on intra-band non-collocation is supported.

After determining that data transmission scheduling based on intra-band non-collocation is not supported based on the first downlink reference signal and the second downlink reference signal, the UE sends receiving capability information to the first network device, in which the receiving capability information is configured to indicate second information, and the second information corresponds to a fact that the data transmission scheduling based on intra-band non-collocation is not supported.

It should be noted that when the UE uses the CA, the UE may only report information to the primary network device and does not need to report information to the auxiliary network device. Therefore, if the UE sends the CA capability information to the first network device, the first network device may be determined as the primary network device of the CA for the UE.

At step S205, after receiving the receiving capability information that is configured to indicate the first information, the first network device sends data transmission scheduling information based on intra-band non-collocation to the UE, and sends second scheduling information to the second network device.

The second scheduling information is configured to indicate the second network device to send second CA downlink service data based on intra-band non-collocation to the UE.

Furthermore, after receiving the receiving capability information that is configured to indicate the second information, the first network device does not send the data transmission scheduling information based on intra-band non-collocation to the UE, and does not send the second scheduling information to the second network device.

At step S206, the first network device sends first CA downlink service data based on intra-band non-collocation to the UE, and the second network device sends second CA downlink service data based on intra-band non-collocation to the UE.

In some possible implementations, the first CA downlink service data and the second CA downlink service data are sent simultaneously.

In the embodiments of the disclosure, the UE sends the CA capability information to the first network device to accurately indicate whether the UE has the intra-band non-collocated CA receiving capability, so that the first network device may realize reasonable scheduling according to the CA receiving capability of the UE, to improve a utilization rate of wireless resources.

The embodiments of the disclosure provides a CA capability information sending method, which is performed by a UE. FIG. 3 is a flowchart of a CA capability information sending method according to an exemplary embodiment. As illustrated in FIG. 3, the metho d includes step S301.

At step S301, CA capability information is sent to a first network device, in which the CA capability information is configured to indicate whether the UE has an intra-band non-collocated CA receiving capability.

In some possible implementations, a capability signaling is sent to the first network device. The capability signaling includes the CA capability information.

In an example, the CA capability information occupies 1 bit. If the UE has the intra-band non-collocated CA receiving capability, the corresponding bit of the sent CA capability information is 1. If the UE does not have the intra-band non-collocated CA receiving capability, the corresponding bit of the sent CA capability information is 0.

In the embodiment of the disclosure, the UE sends the CA capability information to the first network device to accurately indicate whether the UE has the intra-band non-collocated CA receiving capability, so that the first network device may apply the CA receiving capability of the UE to appropriate processes.

In some possible implementations, the method further includes step S302. At step S302, after sending the CA capability information that is configured to indicate that the UE has the intra-band non-collocated CA receiving capability to the first network device, transmission scheduling information based on intra-band non-collocation sent by the first network device is received, and first CA downlink service data sent by the first network device and second CA downlink service data sent by a second network device are received.

Therefore, the UE sends the CA capability information to the first network device to accurately indicate whether the UE has the intra-band non-collocated CA receiving capability, so that the first network device may reasonably schedule the CA receiving capability of the UE, to improve a utilization rate of wireless resources.

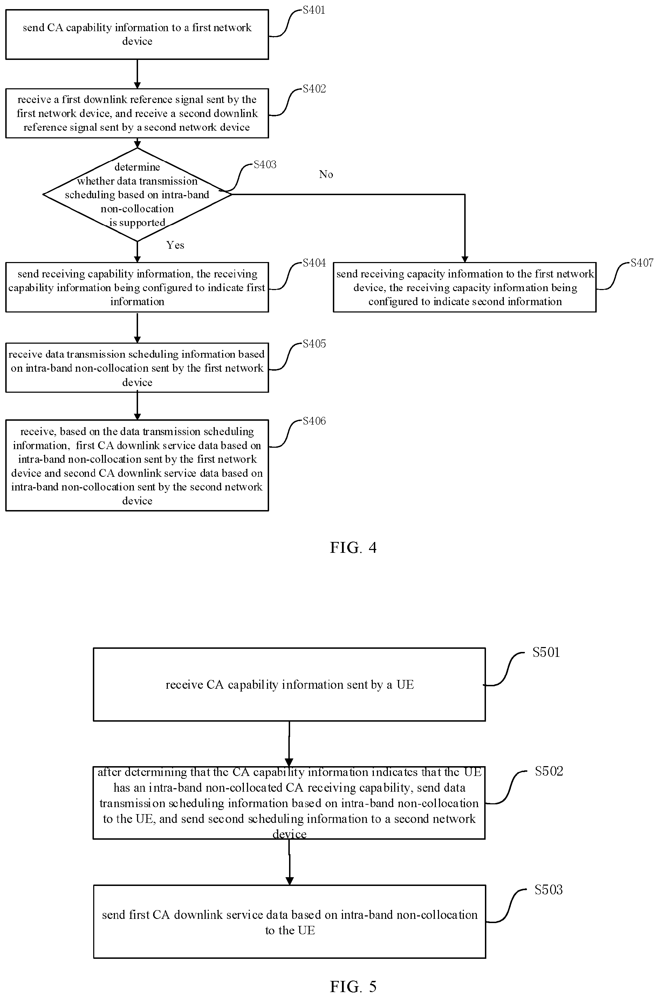

The embodiment of the disclosure provides a CA capability information sending method, which is performed by a UE. FIG. 4 is a flowchart of a CA capability information sending method according to an exemplary embodiment. As illustrated in FIG. 4, the method includes step S401, as follows.

At step S401, CA capability information is sent to a first network device, in which the CA capability information is configured to indicate whether the UE has an intra-band non-collocated CA receiving capability.

In some possible implementations, a capability signaling is sent to the first network device. The capability signaling includes the CA capability information.

In an example, the CA capability information occupies 1 bit. If the UE has the intra-band non-collocated CA receiving capability, the corresponding bit of the CA capability information sent is 1. If the UE does not have the intra-band non-collocated CA receiving capability, the corresponding bit of the CA capability information sent is 0.

At step S402, a first downlink reference signal sent by the first network device is received, and a second downlink reference signal sent by a second network device is received.

The first network device and the second network device are mutually non-collocated devices.

At step S403, based on the first downlink reference signal and the second downlink reference signal, it is determined whether data transmission scheduling based on intra-band non-collocation is supported. If the data transmission scheduling based on intra-band non-collocation is supported, steps S404-S406 are executed. If the data transmission scheduling based on intra-band non-collocation is not supported, step S407 is executed.

In an example, a degree of difference between received powers of the first downlink reference signal and the second downlink reference signal is determined, and whether the data transmission scheduling based on intra-band non-collocation is supported is determined based on the degree of difference between the received powers.

The degree of power difference may be a difference between the received powers of the first downlink reference signal and the second downlink reference signal. If the received power of the first downlink reference signal is p1 and the received power of the second downlink reference signal is p2, the degree of power difference may be referred to as Δp, and the value of Δp is (p1-p2).

The degree of power difference may also be a ratio of a difference between the received powers to a fixed value. If the received power of the first downlink reference signal is p1 and the received power of the second downlink reference signal is p2, the degree of power difference may be referred to as p', and the value of p' is (p1-p2)/p0, where p0 is a fixed value.

In an example, determining whether the data transmission scheduling based on intra-band non-collocation is supported based on the degree of difference between the received powers includes: in response to the degree of difference between the received powers being less than or equal to a set threshold, determining that the data transmission scheduling based on intra-band non-collocation is supported; and in response to the degree of difference between the received powers being greater than the set threshold, determining that the data transmission scheduling based on intra-band non-collocation is not supported.

Alternatively, in another example, determining whether the data transmission scheduling based on intra-band non-collocation is supported based on the degree of difference between the received powers includes: in response to the degree of difference between the received powers being less than a set threshold, determining that the data transmission scheduling based on intra-band non-collocation is supported; and in response to the degree of difference between the received powers being greater than or equal to the set threshold, determining that the data transmission scheduling based on intra-band non-collocation is not supported.

The set threshold may be a maximum tolerable value of a degree of difference of intra-band received powers of a receiver of the UE.

At step S404, the UE sends receiving capability information to the first network device, in which the receiving capability information is configured to indicate first information, and the first information corresponds to a fact that the data transmission scheduling based on intra-band non-collocation is supported.

At step S405, data transmission scheduling information based on intra-band non-collocation sent by the first network device is received.

At step S406, on the basis of the data transmission scheduling information, fir st CA downlink service data based on intra-band non-collocation sent by the first network device is received, second CA downlink service data based on intra-band non-collocation sent by the second network device is received, and the process is completed.

At step S407, after determining that the data transmission scheduling based on intra-band non-collocation is not supported, receiving capacity information is sent to the first network device, in which the receiving capacity information is configured to indicate second information, and the second information corresponds to a fact that the data transmission scheduling based on intra-band non-collocation is not supported.

In the embodiments of the disclosure, the UE sends the CA capability information to the first network device to accurately indicate whether the UE has the intra-band non-collocated CA receiving capability, so that the first network device may reasonably schedule the CA receiving capability of the UE, to improve a utilization rate of wireless resources.

The embodiment of the disclosure provides a method for receiving measurement capability, which is performed by a first network device. The first network device is a primary network device corresponding to the CA of the UE. FIG. 5 is a flowchart of a method for receiving measurement capability according to an exemplary embodiment. As illustrated in FIG. 5, the method includes the following steps.

At step S501, CA capability information sent by a UE is received, in which the CA capability information is configured to indicate whether the UE has an intra-band non-collocated CA receiving capability.

In some possible implementations, a capability signaling send by the UE may be received. The capability signaling includes the CA capability information.

At step S502, after determining that the CA capability information indicates that the UE has the intra-band non-collocated CA receiving capability, data transmission scheduling information based on intra-band non-collocation is sent to the UE, and second scheduling information is sent to a second network device.

The second scheduling information is configured to indicate the second network device to send second CA downlink service data based on intra-band non-collocation to the UE.

At step S503, first CA downlink service data based on intra-band non-collocation is sent to the UE.

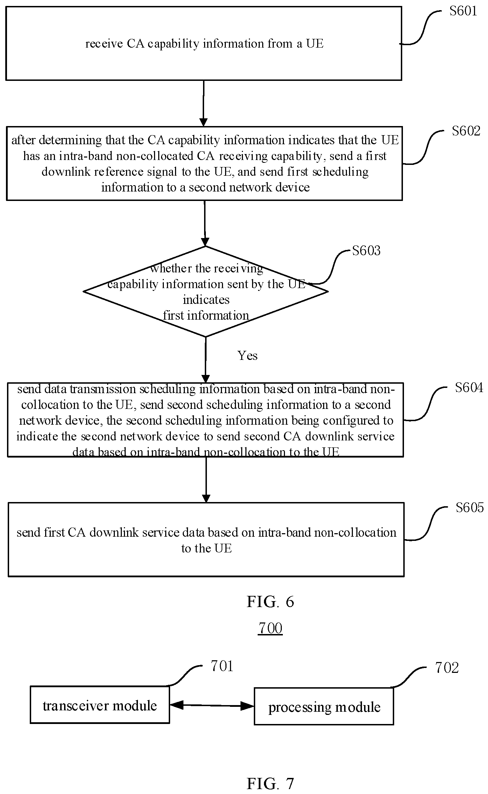

The embodiment of the disclosure provides a method for receiving measurement capability, which is performed by a first network device. FIG. 6 is a flowchart of a method for receiving measurement capability according to an exemplary embodiment. As illustrated in FIG. 6, the method includes the following steps.

At step S601, CA capability information sent by a UE is received, in which the CA capability information is configured to indicate whether the UE has an intra-band non-collocated CA receiving capability.

In some possible implementations, a capability signaling sent by the UE may be received. The capability signaling includes the CA capability information.

At step S602, after determining that the CA capability information indicates that the UE has the intra-band non-collocated CA receiving capability, the first network device sends a first downlink reference signal to the UE, and sends first scheduling information to a second network device, the first scheduling information being configured to indicate the second network device to send a second downlink reference signal to the UE.

At step S603, receiving capability information sent by the UE is received, whether the receiving capability information indicates first information is determined. If the receiving capability information indicates the first information, steps S604-S605 are executed; if the receiving capability information does not indicate the first information, the process is completed.

At step S604, data transmission scheduling information based on intra-band non-collocation is sent to the UE, and second scheduling information is sent to the second network device, the second scheduling information being configured to indicate the second network device to send second CA downlink service data based on intra-band non-collocation to the UE.

At step S605, first CA downlink service data based on intra-band non-collocation is sent to the UE.

The embodiment of the disclosure provides a method for receiving measurement capability, which is performed by a second network device. The second network device is a auxiliary network device corresponding to the CA of the UE. The method includes: receiving first scheduling information sent by a first network device, the first scheduling information being configured to indicate the second network device to send a second downlink reference signal to the UE.

In some possible implementations, the method includes: receiving second scheduling information sent by the first network device, the second scheduling message being configured to indicate the second network device to send second CA downlink service data based on intra-band non-collocation to the UE.

Based on the same idea as the above method embodiments, the embodiments of the disclosure also provide an electronic device that may have the functions of the UE 102 in the above method embodiments and be configured to perform the steps performed by the UE 102 in the above embodiments. The functions may be implemented by hardware, software, or hardware executing corresponding software. The hardware or software includes one or more modules corresponding to the above-described functions.

In a possible implementation, an electronic device 700 shown in FIG. 7 may act as the UE 102 involved in the method embodiments described above and perform the steps performed by the UE 102 in the method embodiments described above.

The electronic device 700 includes a transceiver module 701 and a processing module 702.

The transceiver module 701 is configured to: send CA capability information to a first network device, in which the CA capability information is configured to indicate whether the UE has an intra-band non-collocated CA receiving capability.

In a possible implementation, the transceiver module 701 is further configured to: send a capability signaling to the first network device, in which the capability signaling includes the CA capability information.

In a possible implementation, the transceiver module 701 is further configured to: receive a first downlink reference signal sent by the first network device and a second downlink reference signal sent by a second network device, in which the first network device and the second network device are mutually non-collocated devices.

In a possible implementation, the transceiver module 701 is configured to: determine, based on the first downlink reference signal and the second downlink reference signal, whether data transmission scheduling based on intra-band non-collocation is supported.

In a possible implementation, the transceiver module 701 is configured to: determine a degree of difference between received powers of the first downlink reference signal and the second downlink reference signal, and determine whether the data transmission scheduling based on intra-band non-collocation is supported based on the degree of difference between the received powers.

In a possible implementation, the transceiver module 701 is configured to: in response to the degree of difference between the received powers being less than or equal to a set threshold, determine that the data transmission scheduling based on intra-band non-collocation is supported.

In a possible implementation, the set threshold is a maximum tolerable value of a degree of difference of intra-band received powers of a receiver of the UE.

In a possible implementation, the transceiver module 701 is further configured to: after determining that the data transmission scheduling based on intra-band non-collocation is supported based on the first downlink reference signal and the second downlink reference signal, send receiving capability information to the first network device, in which the receiving capability information is configured to indicate first information, and the first information corresponds to a fact that the data transmission scheduling based on intra-band non-collocation is supported.

In a possible implementation, the transceiver module 701 is further configured to: receive data transmission scheduling information based on intra-band non-collocation sent by the first network device, and on the basis of the data transmission scheduling information, receive first CA downlink service data based on intra-band non-collocation sent by the first network device and second CA downlink service data based on intra-band non-collocation sent by the second network device.

In a possible implementation, the transceiver module 701 is further configured to: after determining that the data transmission scheduling based on intra-band non-collocation is not supported based on the first downlink reference signal and the second downlink reference signal, send receiving capability information to the first network device, in which the receiving capability information is configured to indicate second information, and the second information corresponds to a fact that the data transmission scheduling based on intra-band non-collocation is not supported.

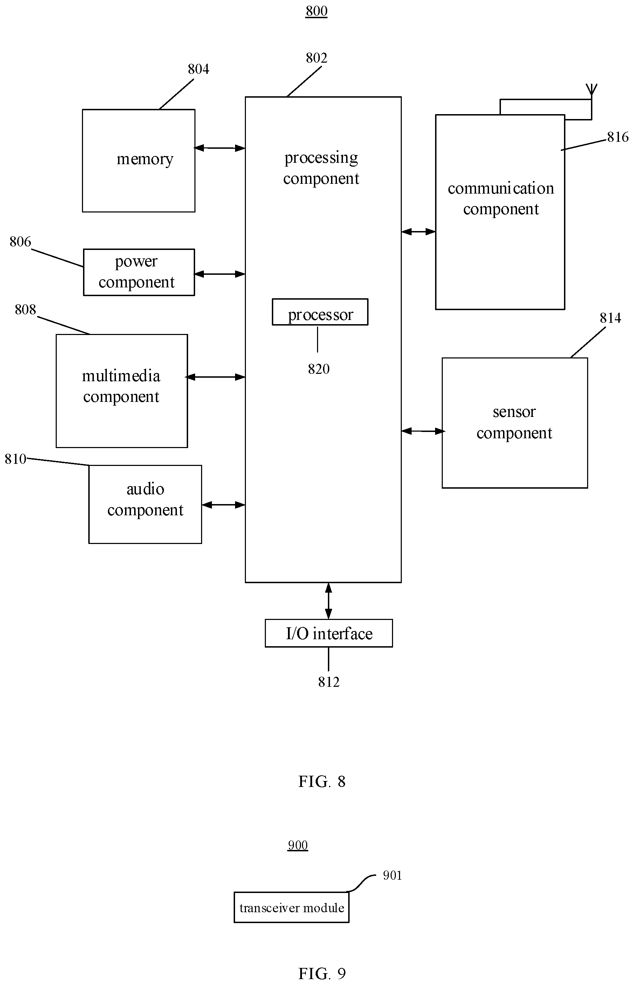

If the electronic device is the UE 102, its structure may also be as shown in FIG. 8.

FIG. 8 is a schematic diagram of an apparatus 800 for transmitting UE capability illustrated according to an exemplary embodiment. For example, the apparatus 800 may be a mobile phone, a computer, a digital broadcasting terminal, a message transceiver device, a game console, a tablet device, a medical device, a fitness device and a personal digital assistant, etc.

As illustrated in FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communication, camera operations, and recording operations. The processing component 802 may include one or more processors 820 to perform instructions to implement all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the apparatus 800. Examples of such data include instructions for any application programs or methods operated on the apparatus 800, contact data, phonebook data, messages, pictures, videos, etc. The memory 804 may be implemented using any type of volatile or nonvolatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power for the apparatus 800.

The multimedia component 808 includes a screen providing an output interface between the apparatus 800 and a user. In some embodiments, the screen may include a Liquid Crystal Display (LCD) and a Touch Panel (TP). If the screen includes the TP, the screen may be implemented as a touch screen to receive input signals from the user. The TP includes one or more touch sensors to sense touches, slides, and gestures on the touch panel. The touch sensors may not only sense a boundary of the touch or the slide action, but also sense a wake-up time and a pressure associated with the touch or slide action. In some embodiments, the multimedia component 808 includes a front-facing camera and/or a rear-facing camera. When the apparatus 800 is in an operating mode, such as a shooting mode or a video mode, the front-facing camera and/or the rear-facing camera may receive external multimedia data. Each front-facing camera and rear-facing camera may be a fixed optical lens system or has a focal length and an optical zoom capability.

The audio component 810 is configured to output and/or input audio signals. For example, the audio component 810 includes a microphone (MIC) configured to receive an external audio signal when the apparatus 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface module may be a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an on/off status of the apparatus 800, relative positioning of components, e.g., the display and the keypad, of the apparatus 800, a change in position of the apparatus 800 or a component of the apparatus 800, a presence or absence of a user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a optical sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 may access a wireless network based on a communication standard, such as WiFi, 4G, or 5G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a radio-frequency identification (RFID) technology, an Infrared Data Association (IrDA) technology, an Ultra-Wide Band (UWB) technology, a Blue Tooth (BT) technology, and other technologies.

In an exemplary embodiment, the apparatus 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an exemplary embodiment, there is also provided a non-transitory computer readable storage medium including instructions, such as the memory 804, executable by the processor 820 in the apparatus 800, for implementing the above method. For example, the non-transitory computer-readable storage medium may be a ROM, a Random Access Memory (RAM), a CD-ROM, a magnetic tape, a floppy disc, and an optical data storage device, etc.

Based on the same idea as the above method embodiments, the embodiments of the disclosure also provide a communication apparatus that may have the functions of the network device 101 in the above method embodiments and may be configured to perform the steps performed by the network device 101 in the above embodiments. The functions may be implemented by hardware, software, or hardware executing corresponding software. The hardware or software includes one or more modules corresponding to the above-described functions.

In a possible implementation, a communication apparatus 900 shown in FIG. 9 may act as the network device 101 involved in the above method embodiments and perform the steps performed by the network device 101 in the above method embodiments.

As illustrated in FIG. 9, the apparatus 900 includes a transceiver module 901.

The transceiver module 901 is configured to receive CA capability information sent by a UE, in which the CA capability information is configured to indicate whether the UE has an intra-band non-collocated CA receiving capability.

In some possible implementations, the transceiver module 901 is further configured to: receive a capability signaling sent by the UE, in which the capability signaling includes the CA capability information.

In some possible implementations, the transceiver module 901 is further configured to: in response to the CA capability information indicating that the UE has the intra-band non-collocated CA receiving capability, send a first downlink reference signal to the UE, and send first scheduling information to a second network device, the first scheduling information being configured to indicate the second network device to send a second downlink reference signal to the UE.

In some possible implementations, the transceiver module 901 is further configured to: receive receiving capability information sent by the UE, in which the receiving capability information indicates first information, and the first information corresponds to a face that data transmission scheduling based on intra-band non-collocation is supported.

In some possible implementations, the transceiver module 901 is further configured to: send data transmission scheduling information based on intra-band non-collocation to the UE.

In some possible implementations, the transceiver module 901 is further configured to: send second scheduling information to the second network device, the second scheduling information being configured to indicate the second network device to send second CA downlink service data based on intra-band non-collocation to the UE.

In some possible implementations, the transceiver module 901 is further configured to: send first CA downlink service data based on intra-band non-collocation to the UE.

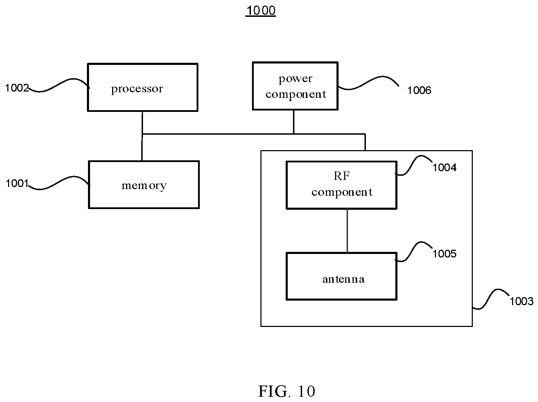

When the communication apparatus is the network device 101, the structure of the communication apparatus may also be illustrated in FIG. 10. As illustrated in FIG. 10, the apparatus 1000 includes a memory 1001, a processor 1002, a transceiver component 1003, and a power component 1006. The memory 1001 is coupled with the processor 1002 and may be configured to store a program and data necessary for the communication apparatus 1000 to implement functions. The processor 1002 is configured to support the communication apparatus 1000 to perform corresponding functions of the above methods, and the functions may be implemented by calling the program stored in the memory 1001. The transceiver component 1003 may be a wireless transceiver, which may be configured to support the communication apparatus 1000 to receive and send signaling and/or data through a wireless radio interface. The transceiver component 1003 may also be called a transceiver unit or a communication unit. The transceiver component 1003 may include a radio frequency component 1004 and one or more antennas 1005. The radio frequency component 1004 may be a remote radio unit (RRU), which may be configured for transmitting radio frequency signals and conversing radio frequency signals and baseband signals. The one or more antennas 1005 may be configured for radiating and receiving radio frequency signals.

When the communication apparatus 1000 needs to send data, the processor 1002 may perform baseband processing on the data to be sent, and transmit baseband signals to the RRU. The RRU performs radio frequency processing on the baseband signals and sends the radio frequency signals in the form of electromagnetic waves through the antenna. When data is sent to the communication apparatus 1000, the RRU receives the radio frequency signals through the antenna, converts the radio frequency signals into the baseband signals, and sends the baseband signals to the processor 1002. The processor 1002 converts the baseband signals into data and processes the data.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the embodiments of the disclosure are not limited to the exact structure that has been described above and illustrated in the accompanying drawings, and that various modifications and changes can be made without departing from the scope thereof. It is intended that the scope of the embodiments of the disclosure only be limited by the appended claims.

### INDUSTRIAL PRACTICALITY

The UE sends the CA capability information to the first network device to accurately indicate whether the UE has the intra-band non-collocated CA receiving capability, so that the first network device may realize reasonable scheduling according to the CA receiving capability of the UE to improve the utilization rate of wireless resources.

## Claims

1. A user equipment (UE) capability sending method, performed by a UE, comprising:
sending carrier aggregation (CA) capability information to a first network device, wherein the CA capability information is configured to indicate whether the UE has an intra-band non-collocated CA receiving capability.

2. The method of claim 1, wherein sending the CA capability information to the first network device comprises:
sending a capability signaling to the first network device, wherein the capability signaling comprises the CA capability information.

3. The method of claim 1 or 2, further comprising:
receiving a first downlink reference signal sent by the first network device and a second downlink reference signal sent by a second network device, wherein the first network device and the second network device are mutually non-collocated devices.

4. The method of claim 3, further comprising:
determining, based on the first downlink reference signal and the second downlink reference signal, whether data transmission scheduling based on intra-band non-collocation is supported.

5. The method of claim 4, wherein determining, based on the first downlink reference signal and the second downlink reference signal, whether the data transmission scheduling based on intra-band non-collocation is supported comprises:
determining a degree of difference between received powers of the first downlink reference signal and the second downlink reference signal, and determining whether the data transmission scheduling based on intra-band non-collocation is supported based on the degree of difference between the received powers.

6. The method of claim 5, wherein determining whether the data transmission scheduling based on intra-band non-collocation is supported based on the degree of difference between the received powers comprises:
determining that the data transmission scheduling based on intra-band non-collocation is supported in response to the degree of difference between the received powers being less than or equal to a set threshold.

7. The method of claim 6, wherein the set threshold is a maximum tolerable value of a degree of difference of intra-band received powers of a receiver of the UE.

8. The method of any one of claims 4-7, further comprising:
after determining that the data transmission scheduling based on intra-band non-collocation is supported based on the first downlink reference signal and the second downlink reference signal, sending receiving capability information to the first network device, wherein the receiving capability information is configured to indicate first information, the first information corresponds to a fact that the data transmission scheduling based on intra-band non-collocation is supported.

9. The method of claim 8, further comprising:
receiving data transmission scheduling information based on intra-band non-collocation sent by the first network device, and receiving, based on the data transmission scheduling information, first CA downlink service data based on intra-band non-collocation sent by the first network device and second CA downlink service data based on intra-band non-collocation sent by the second network device.

10. The method of any one of claims 4-7, further comprising:
after determining that the data transmission scheduling based on intra-band non-collocation is not supported based on the first downlink reference signal and the second downlink reference signal, sending receiving capability information to the first network device, wherein the receiving capability information is configured to indicate second information, the second information corresponds to a fact that the data transmission scheduling based on intra-band non-collocation is not supported.

11. A user equipment (UE) capability sending method, performed by a first network device, comprising:
receiving carrier aggregation (CA) capability information sent by a UE, wherein the CA capability information is configured to indicate whether the UE has an intra-band non-collocated CA receiving capability.

12. The method of claim 11, wherein receiving the CA capability information sent by the UE, comprises:
receiving a capability signaling sent by the UE, the capability signaling comprising the CA capability information.

13. The method of claim 11 or 12, further comprising:
in response to the CA capability information indicating that the UE has the intra-band non-collocated CA receiving capability, sending a first downlink reference signal to the UE, and sending first scheduling information to a second network device, the first scheduling information being configured to indicate the second network device to send a second downlink reference signal to the UE.

14. The method of claim 13, further comprising:
receiving capability information sent by the UE, wherein the receiving capability information indicates first information, and the first information corresponds to a fact that the data transmission scheduling based on intra-band non-collocation is supported.

15. The method of claim 11 or 14, further comprising:
sending data transmission scheduling information based on intra-band non-collocation to the UE.

16. The method of claim 15, further comprising:
sending second scheduling information to the second network device, the second scheduling information being configured to indicate the second network device to send second CA downlink service data based on intra-band non-collocation to the UE.

17. The method of claim 16, further comprising:
sending first CA downlink service data based on intra-band non-collocation to the UE.

18. A user equipment (UE) capability sending apparatus, configured on a UE, comprising:
a transceiver module, configured to send carrier aggregation (CA) capability information to a first network device, wherein the CA capability information is configured to indicate whether the UE has an intra-band non-collocated CA receiving capability.

19. A user equipment (UE) capability receiving apparatus, configured on a first network device, comprising:
a transceiver module, configured to receive carrier aggregation (CA) capability information sent by a UE, wherein the CA capability information is configured to indicate whether the UE has an intra-band non-collocated CA receiving capability.

20. An electronic device, comprising a processor and a memory,
wherein the memory is configured for storing computer programs; and
the processor is configured for executing the computer programs to implement the method of any one of claims 1-10.

21. A communication apparatus, comprising a processor and a memory, wherein
wherein the memory is configured for storing computer programs; and
the processor is configured for executing the computer programs to implement the method of any one of claims 11-17.

22. A computer-readable storage medium having instructions stored thereon, wherein when the instructions are called and executed on a computer, the computer is caused to perform the method of any one of claims 1-10.

23. A computer-readable storage medium having instructions stored thereon, wherein when the instructions are called and executed on a computer, the computer is caused to perform the method of any one of claims 11-17.
